# EUROPÄISCHE PATENTANMELDUNG

(11) **EP 1 479 945 A2**
(43) Veröffentlichungstag der Anmeldung: **24.11.2004**
(21) Anmeldenummer: 04010888.8
(22) Anmeldetag: 07.05.2004
(51) Int. Cl.: F16H 61/04

(54) **Lastschaltgetriebe mit zwei Kupplungen und einer Vorrichtung zur Erfassung des Kupplungsmoments und Verfahren zur Steuerung einer Schubrückschaltung**

(30) Priorität: 23.05.2003 DE 10323312
(71) Anmelder: LuK Lamellen und Kupplungsbau Beteiligungs KG, 77815 Bühl (DE)
(72) Erfinder: Preisner, Marian, 77815 Bühl (DE); Benz, Jürgen, 77704 Oberkirch (DE); Berger, Reinhard, Dr., 77815 Bühl (DE); Lang, Dietmar, Dr., 66989 Höheischweiler (DE); Schweizer, Alexander, 75045 Walzbachtal-Jöhlingen (DE); Werner, Olaf, Dr., 77815 Bühl (DE)

(57) **Zusammenfassung**

Es wird ein Lastschaltgetriebe mit zwei Getriebesträngen vorgeschlagen, wobei jedem Getriebestrang eine Reibungskupplung zugeordnet ist, und die Getriebestränge mit einer Abtriebswelle zur Momentenübertragung koppelbar sind. Das Getriebe besitzt eine Vorrichtung, die das von der Reibungskupplung des mit der Abtriebswelle gekoppelten aktiven Getriebestrangs übertragene Kupplungsmoment feststellt und bei einem Unterschreiten eines Schwellenwerts des Kupplungsmoments ein Auslegen der aktiven Gangstufe einleitet.

## Beschreibung

Die vorliegende Erfindung betrifft ein Lastschaltgetriebe mit zwei Getriebesträngen, wobei jedem Getriebestrang eine eigene Reibungskupplung zugeordnet ist und die Getriebestränge mit einer Abtriebswelle zur Momentenübertragung koppelbar sind. Die Erfindung betrifft auch ein Verfahren zur Steuerung einer Schubrückschaltung eines zwei Getriebestränge aufweisenden Lastschaltgetriebes.

Bei dem vorstehend genannten Lastschaltgetriebe handelt es sich um ein zur Verwendung in einem Kraftfahrzeug vorgesehenes Getriebe mit zwei Getriebesträngen. Die Betätigung der einzelnen Getriebestränge während des Schaltvorgangs und die Betätigung der Reibungskupplungen kann über elektromechanische und/oder hydraulische Aktoren stattfinden. Als spezielle Ausführungsform eines solchen Doppelkupplungsgetriebes ist ein so genanntes Parallelschaltgetriebe (PSG) zu nennen, bei dem die einzelnen Gänge in zwei Teilgetrieben, den beiden genannten Getriebesträngen angeordnet sind, wobei jeder Getriebestrang zur Momenteneinkopplung eine eigene Reibungskupplung besitzt.

Ein solches Parallelschaltgetriebe ist zur Vermeidung einer Zugkraftunterbrechung während des Schaltvorgangs lastschaltbar, das heißt es ist bei ihm möglich, im lastfreien Teilgetriebe einen Gang vorzuwählen, während das Drehmoment vom anderen Teilgetriebe übertragen wird. Wenn dann der eigentliche Schaltvorgang, das heißt das Überblenden von einem Gang zum nächsten Gang stattfinden soll, dann wird das Drehmoment von der dem aktiven Getriebestrang zugeordneten Reibungskupplung auf die dem inaktiven Getriebestrang zugeordnete Reibungskupplung überblendet.

Ein großer Vorteil eines solchen Parallelschaltgetriebes liegt gegenüber der Verwendung eines Stufenautomat mit einem Planetengetriebe in der Verbrauchseinsparung des damit gekoppelten Antriebsmotors, da ein Stufenautomat regelmäßig mehrere Kupplungen bzw. Bremsbänder aufweist, die Reibung und damit Verlustleistung erzeugen.

Bei einem Parallelschaltgetriebe erzeugt aber die auch als Trockenkupplung ausführbare Kupplung des gerade momentenfreien Teilgetriebes keinen Schlupf, solange in dem Teilgetriebe auch kein Gang vorgewählt ist.

Das Anforderungsprofil an ein solches Parallelschaltgetriebe entspricht weitgehend demjenigen eines Stufenautomaten, das heißt, dass ein mit einem solchen Parallelschaltgetriebe ausgestattetes Fahrzeug einen Fahrkomfort zur Verfügung stellen soll, der dem eines mit einem Planetengetriebe ausgestatteten Fahrzeugs entspricht.

Wie bereits vorstehend erwähnt, ist das Parallelschaltgetriebe lastschaltbar, was sowohl für Schaltungen im Zugbetrieb als auch Schaltungen im Schubbetrieb des damit ausgestatteten Fahrzeugs gilt.

Ein wesentliches Kriterium bezüglich des vom Fahrer eines mit einem solchen Getriebe ausgestatteten Kraftfahrzeugs ist die Vermeidung von ganz allgemein Schwingungsproblemen. Wenn nun ein Fahrzeug im Bereich des Antriebs schwingungstechnisch betrachtet wird, dann können im Bereich der Kette Antriebsmotor-Getriebe-Triebstrang auftretende Schwingungen zu einer Verringerung des vom Fahrer empfundenen Fahrkomforts beitragen. So würde ein Fahrer Ruckelbewegungen während eines Gangwechselvorgangs sicherlich als fahrkomfortmindernd betrachten und in ähnlicher Weise auch im Triebstrang auftretende Schwingungen bezüglich des Fahrkomforts negativ beurteilen.

Dynamische Schwingungsvorgänge können bei einem Parallelschaltgetriebe beim Gangwechsel auftreten, also beispielsweise auch bei Rückschaltvorgängen vom beispielsweise zweiten in den ersten Gang während des Schubbetriebs, also beispielsweise beim Ausrollen des Fahrzeugs vor einer Rot zeigenden Lichtsignalanlage.

Bei am Fahrzeug durchgeführten Versuchen hat sich nun gezeigt, dass solche zu vermeidende Triebstrangschwingungen als Folge eines Synchronisierungsstoßes bei Schubrückschaltungen auftreten können.

Ausgehend hiervon liegt der vorliegenden Erfindung nunmehr die Aufgabe zugrunde, ein gattungsgemäßes Lastschaltgetriebe mit zwei Getriebesträngen so weiterzubilden, dass die Anregung zu Triebstrangschwingungen während Schubrückschaltungen vermieden werden kann. Außerdem soll ein Verfahren zur Steuerung einer Schubrückschaltung eines zwei Getriebestränge aufweisenden Lastschaltgetriebes bereitgestellt werden.

Die Erfindung weist zur Lösung dieser Aufgabe hinsichtlich des Lastschaltgetriebes die im Anspruch 1 angegebenen Merkmale auf. Vorteilhafte Ausgestaltungen hiervon sind in den weiteren Ansprüchen beschrieben.

Die Erfindung weist darüber hinaus zur Lösung dieser Aufgabe hinsichtlich des Verfahrens die im Anspruch 6 angegebenen Merkmale auf.

Die Erfindung schafft nun ein Lastschaltgetriebe mit zwei Getriebesträngen, wobei jedem Getriebestrang eine Reibungskupplung zugeordnet ist und die Getriebestränge abwechselnd mit einer Abtriebswelle zur Momentenübertragung in den und von dem Triebstrang eines damit versehenen Fahrzeugs koppelbar sind und das Getriebe eine Vorrichtung besitzt, die das von der Reibungskupplung des mit der Abtriebswelle gekoppelten aktiven Getriebestrangs übertragene Kupplungsmoment feststellt und bei einem Unterschreiten eines Schwellenwerts des Kupplungsmoments ein Auslegen der aktiven Gangstufe einleitet.

Es bedeutet dies mit anderen Worten, dass das erfindungsgemäß vorgesehene Lastschaltgetriebe in der Form beispielsweise eines Parallelschaltgetriebes eine Vorrichtung aufweist, die zur Feststellung des von der aktiven Kupplung übertragenen Kupplungsmoments in der Lage ist und ein Auslegen der aktiven Gangstufe dann in die Wege leiten kann, wenn das festgestellte Kupplungsmoment unterhalb eines beispielsweise empirisch ermittelten fahrzeugspezifischen Schwellenwerts des Kupplungsmoments liegt.

Wenn die erfindungsgemäß vorgesehene Vorrichtung feststellt, dass das Kupplungsmoment einen Wert von insbesondere etwa 15 Nm unterschreitet, so kann sie an eine Getriebesteuerung ein Signal ausgeben, die sich im Eingriff befindende Gangstufe des aktiven Getriebestrangs in die Neutralstellung auszulegen. Damit wird erreicht, dass der Triebstrang geöffnet wird, bevor es zur Anregung von Triebstrangschwingungen kommt, die durch einen Synchronisierungsstoß beim Einlegen einer neuen, insbesondere niedrigeren Gangstufe auf dem bislang inaktiven Getriebestrang angeregt werden könnten.

Da es sich gezeigt hat, dass die hier betrachteten Triebstrangschwingungen insbesondere bei Schubrückschaltungen angeregt werden könnten, ist es nach der Erfindung vorgesehen, dass die Vorrichtung mit der Getriebesteuerung funktional verbunden ist zum Empfang von Signalen, die eine Schubrückschaltung signalisieren und die Vorrichtung durch solche Signale zur Feststellung des Kupplungsmoments aktivierbar ist. Es bedeutet dies mit anderen Worten, dass es nicht erforderlich ist, das Kupplungsmoment mittels der erfindungsgemäß, vorgesehenen Vorrichtung laufend zu überwachen, sondern die Vorrichtung erst dann zur Feststellung des Kupplungsmoments aktiviert wird, wenn von der Getriebesteuerung eine Schubrückschaltung ausgelöst werden soll und hierzu von der Vorrichtung das Kupplungsmoment der aktiven Kupplung überwacht werden soll.

Zwischen der Getriebesteuerung und der Vorrichtung kann eine Rückkopplung stattfinden derart, dass die Vorrichtung ein Signal an die Getriebesteuerung ausgibt, dass die aktive Gangstufe ausgelegt werden soll, sobald das festgestellte Kupplungsmoment der aktiven Kupplung den vorstehend beschriebenen Schwellenwert von beispielsweise 15 Nm unterschreitet.

Nach einer Weiterbildung der Erfindung kann die Vorrichtung auch zur Feststellung von Schwingungen im Triebstrang eines mit dem Lastschaltgetriebe versehenen Fahrzeugs ausgebildet sein. Nach dieser Weiterbildung der Erfindung kann die Vorrichtung auch einen niedrigeren Schwellenwert als den vorstehend beschriebenen Schwellenwert von beispielsweise 15 Nm bezüglich des von der aktiven Kupplung übertragenen Kupplungsmoments zulassen, bevor das Signal zum Auslegen der aktiven Gangstufe an die Getriebesteuerung erfolgt, solange noch keine komfortmindernden Schwingungen im Triebstrang des Fahrzeugs von der Vorrichtung erkannt werden.

Nach einer Weiterbildung der Erfindung ist die Vorrichtung auch zur fahrzeugspezifischen Ermittlung des Kupplungsmomentenschwellenwerts ausgebildet, unterhalb dessen Triebstrangschwingungen auftreten. Damit ist ein adaptives Verhalten der nach der Erfindung vorgesehenen Vorrichtung möglich derart, dass der Schwellenwert in Abhängigkeit der jeweiligen Fahrsituation des Fahrzeugs angepasst werden kann und somit ein situationsspezifischer Schwellenwert eingestellt werden kann.

Wie es vorstehend bereits erwähnt wurde, haben Fahrzeugerprobungsfahrten gezeigt, dass aufgrund von Synchronisationsstößen bei Schubrückschaltungen beim Ausrollen des Fahrzeugs und Rückschaltungen von der zweiten Fahrstufe in die erste Fahrstufe fahrkomfortmindernde Triebstrangschwingungen auftreten können.

Als Abhilfemaßnahme gegen dieses Phänomen schafft die Erfindung auch ein Verfahren zur Steuerung einer Schubrückschaltung eines zwei Getriebestränge aufweisenden Lastschaltgetriebes mit mehreren Schritten.

In einem ersten Schritt wird nach dem erfindungsgemäßen Verfahren festgestellt, dass im inaktiven Getriebestrang eine niedrigere Gangstufe eingelegt werden soll, als sie sich im aktiven Getriebestrang gegenwärtig im Eingriff befindet, also beispielsweise eine Rückschaltung vom zweiten in den ersten Gang stattfinden soll.

In einem nächsten Schritt wird das Kupplungsmoment der dem aktiven Getriebestrang zugeordnete Kupplung ermittelt, was beispielsweise durch die vorstehend geschilderte Vorrichtung stattfinden kann.

Sodann wird festgestellt, ob sich - weil beispielsweise die Getriebesteuerung mittlerweile an einen elektromechanischen oder hydraulischen Aktor (Getriebesteller) einen Befehl zum Auslegen der aktiven Gangstufe gegeben hat - der zu Beginn des Verfahrensablaufs aktive Getriebestrang schon in der Neutralstellung befindet.

In einem nächsten Schritt wird dann in Abhängigkeit von der Feststellung des Kupplungsmoments der Kupplung, die dem aktiven Getriebestrang zugeordnet ist und in Abhängigkeit von der Getriebestellung des aktiven oder vormals aktiven Getriebestrangs ein Signal an die Getriebesteuerung ausgegeben, den Getriebestrang in die Neutralstellung zu verfahren.

Schließlich wird in einem weiteren Schritt und in Abhängigkeit von der Feststellung der Getriebestellung an die Getriebesteuerung ein Signal ausgegeben, die niedrigere Gangstufe auf dem vormals inaktiven Getriebestrang einzulegen.

Die Erfindung wird im Folgenden anhand der Zeichnung näher erläutert. Diese zeigt:
Fig. 1 schematisch und in vereinfachter Darstellung ein Modell eines Parallelschaltgetriebe-Triebstrangs; und
Fig. 2 ein Ablaufdiagramm zur Erläuterung des erfindungsgemäßen Verfahrens.

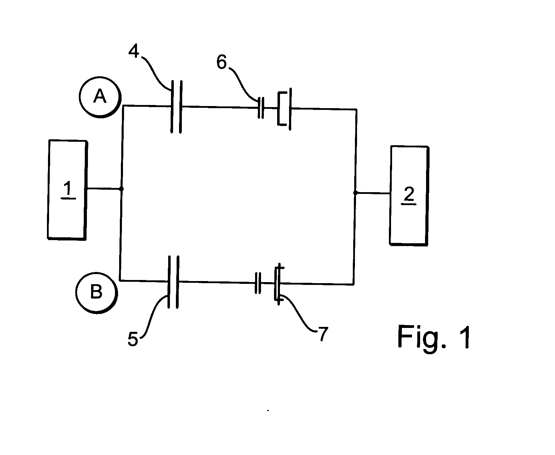

Wie bereits erwähnt, zeigt Fig. 1 der Zeichnung eine schematische Darstellung eines Triebstranges mit einem Parallelschaltgetriebe.

Ein Antriebsmotor 1 stellt das zum Antrieb des Fahrzeugs 2 erforderliche Motormoment zur Verfügung und koppelt dies in ein schematisch mit dem Bezugszeichen 3 bezeichnetes Parallelschaltgetriebe ein.

Das Parallelschaltgetriebe weist zwei Getriebestränge auf, die in Fig. 1 der Zeichnung mit A und B bezeichnet sind.

Die beiden Getriebestränge A, B weisen jeweils eine eigene Reibungskupplung 4, 5 zum Einkoppeln des vom Motor stammenden Abtriebsmoments (bzw. des Schleppmoments) in den jeweiligen Getriebestrang auf.

Bei der in Fig. 1 der Zeichnung dargestellten Stellung des Parallelschaltgetriebes 3 befindet sich der Getriebestrang B in einer aktiven Stellung und der Getriebestrang A befindet sich in einer inaktiven Stellung.

Wenn nun ein Schubrückschaltvorgang, beispielsweise vom zweiten in den ersten Gang eingeleitet werden soll und damit eine Überblendung des Kupplungsmoments von der Kupplung 5 auf die Kupplung 4 stattfinden soll, so ist auf dem inaktiven Kupplungsstrang A eine Gangstufe vorzuwählen und zu diesem Zweck wird über die schematisch dargestellte Synchronisierung 6 auf dem Getriebestrang A ein Einspurvorgang ausgeführt.

Es hat sich nun gezeigt, dass diese Synchronisierung zu unerwünschten Triebstrangschwingungen führen kann, wenn das von der Kupplung 5 übertragene Kupplungsmoment sehr kleine Werte von etwa unterhalb 15 Nm annimmt, die Kupplung also nur noch sehr wenig Moment überträgt oder schon geöffnet ist und sich die mit dem Bezugszeichen 7 auf dem aktiven Getriebestrang B angeordnete Gangstufe noch im Eingriff befindet.

Zur Beseitigung dieses Problems weist das erfindungsgemäße Lastschaltgetriebe nun eine Vorrichtung auf, die das von der Reibungskupplung 5 übertragene Kupplungsmoment feststellen kann und bei einem Unterschreiten eines Kupplungsmomentschwellenwerts von beispielsweise 15 Nm oder weniger, der empirisch und fahrzeugspezifisch bestimmt werden kann, ein Auslegen der aktiven Gangstufe 7 einleitet.

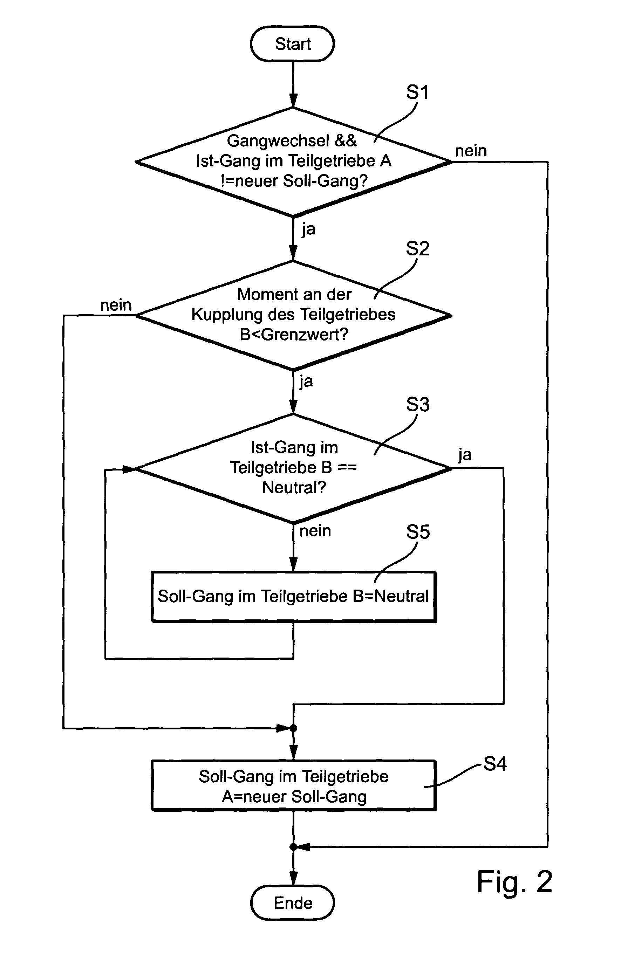

Die hierbei ablaufenden einzelnen Schritte werden nachfolgend unter Bezugnahme auf Fig. 2 der Zeichnung erläutert werden.

Zunächst wird in einem ersten Verfahrensschritt S1 festgestellt, ob im inaktiven Getriebestrang A eine Gangstufe eingelegt werden soll, d.h. ein Gangwechsel durchgeführt werden soll. Es wird bei der hier folgenden Darstellung davon ausgegangen, dass es sich bei diesem Gangwechselvorgang um eine Schubrückschaltung handelt, sich das Parallelschaltgetriebe 3 nach Fig. 1 beispielsweise in der zweiten Gangstufe befindet (Teilgetriebe oder Getriebestrang B aktiv) und eine Schubrückschaltung in den ersten Gang stattfinden soll (Teilgetriebe oder Getriebestrang A) und hierzu ein Überblenden des Kupplungsmoments von der Kupplung 5 auf die Kupplung 4 stattfindet.

Wenn die im Schritt S1 ablaufende Überprüfung ergeben hat, dass ein solcher Gangwechsel stattfinden soll, dann wird in einem Schritt S2 überprüft, ob das von der Kupplung 5 des Teilgetriebes B übertragene Kupplungsmoment kleiner ist als ein Grenzwert von beispielsweise 15 Nm.

Wenn diese Überprüfung ergeben hat, dass die Kupplung 5 bereits geöffnet ist oder sich im Schlupfzustand befindet und nurmehr sehr wenig Kupplungsmoment überträgt, dann wird in einem nächsten Schritt S3 überprüft, ob sich die Gangstufe 7 noch im Eingriff befindet oder das Teilgetriebe B bereits in die Neutralstellung verfahren wurde. Wird bei dieser Überprüfung festgestellt, dass das Teilgetriebe 7 bereits geöffnet ist, dann kann in einem Schritt S4 der neue Zielgang oder Sollgang im Teilgetriebe A eingelegt werden. In ähnlicher Weise kann die Prozedur auch vom Schritt S2 direkt zum Schritt S4 springen und sofort an die Getriebesteuerung eine Anweisung ausgeben, den neuen Zielgang (beim dargestellten Ausführungsbeispiel den ersten Gang) einzuspuren, wenn das von der Kupplung 5 übertragene Moment noch größer ist als der Kupplungsmomentschwellenwert.

Wenn aber die Überprüfung im Schritt S3 ergeben hat, dass sich das Teilgetriebe B noch nicht in der Neutralstellung befindet und (siehe Schritt S2) die Kupplung 5 nur mehr weniger Moment als den Schwellenwert überträgt, dann wird in einem nächsten Schritt S5 an die Getriebesteuerung eine Anweisung ausgegeben, das Teilgetriebe B in die Neutralstellung zu verfahren, die Gangstufe 7 also auszulegen.

Eine im Schritt S3 in einem weiteren Verfahrensdurchlauf durchgeführte Überprüfung dient dann dazu, festzustellen, ob sich das Teilgetriebe B nunmehr in der Neutralstellung befindet, woraufhin die Prozedur vom Schritt S3 zum Schritt S4 verzweigt und im Teilgetriebe A die neue Zielgangstufe, der erste Gang, eingelegt und damit vorgewählt wird.

Das nach der Erfindung vorgesehene Lastschaltgetriebe kann mittels seiner Überwachung des Kupplungsmoments der dem aktiven Getriebestrang zugeordneten Kupplung feststellen, ob dieses Kupplungsmoment einen die Anregung von Triebstrangschwingungen begünstigenden niedrigen Schwellenwert von beispielsweise 15 Nm unterschreitet. Ist diese Bedingung erfüllt, dann wird von dieser Vorrichtung an die Getriebesteuerung ein Signal ausgegeben, die noch aktive Gangstufe auszulegen und somit die Masse des aktiven Getriebestrangs verringert und die Neigung zur Anregung von Triebstrangschwingungen reduziert.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Lastschaltgetriebe mit zwei Getriebesträngen (A, B), wobei jedem Getriebestrang (A, B) eine Reibungskupplung (4, 5) zugeordnet ist, und die Getriebestränge (A, B) mit einer Abtriebswelle zur Momentenübertragung koppelbar sind, **gekennzeichnet durch** eine Vorrichtung, die das von der Reibungskupplung (4, 5) des mit der Abtriebswelle gekoppelten aktiven Getriebestrangs (A, B) übertragene Kupplungsmoment feststellt und bei einem Unterschreiten eines Schwellenwerts des Kupplungsmoments ein Auslegen der aktiven Gangstufe einleitet.

2. Lastschaltgetriebe nach Anspruch 1, **dadurch gekennzeichnet, dass** die Vorrichtung mit einer Getriebesteuerung funktional zum Empfang von Signalen gekoppelt ist, die eine Schubrückschaltung signalisieren und die Vorrichtung mittels der Signale zur Feststellung des Kupplungsmoments aktivierbar ist.

3. Laschaltgetriebe nach Anspruch 1 oder 2, **dadurch gekennzeichnet, dass** die Vorrichtung zur Abgabe eines Signals zum Auslegen der aktiven Gangstufe an eine Getriebesteuerung ausgebildet ist.

4. Lastschaltgetriebe nach einem der Ansprüche 1 bis 3, **dadurch gekennzeichnet, dass** die Vorrichtung zur Feststellung von Schwingungen im Triebstrang eines mit dem Lastschaltgetriebe versehenen Fahrzeugs ausgebildet ist.

5. Lastschaltgetriebe nach Anspruch 4, **dadurch gekennzeichnet, dass** die Vorrichtung zur fahrzeugspezifischen Ermittlung des Kupplungsmomentsschwellenwerts ausgebildet ist, unterhalb dessen Triebstrang auftreten.

6. Verfahren zur Steuerung einer Schubrückschaltung eines zwei Getriebestränge (A; B) aufweisenden Lastschaltgetriebes (3) mit folgenden Schritten:
a) es wird festgestellt, dass im inaktiven Getriebestrang (Getriebestrang A) eine niedrigere Gangstufe als die im aktiven Getriebestrang (Getriebestrang B) eingelegte Gangstufe einzulegen ist;
b) es wird das übertragene Moment der dem Getriebestrang B zugeordneten Kupplung ermittelt;
c) es wird festgestellt, ob sich der Getriebestrang B in der Neutralstellung befindet;
d) es wird in Abhängigkeit von der Feststellung im Schritt b) und Schritt c) ein Signal an die Getriebesteuerung zum Verfahren des Getriebestrangs B in die Neutralstellung ausgegeben;
e) es wird in Abhängigkeit von der Feststellung im Schritt c) ein Signal an die Getriebesteuerung zum Einlegen der niedrigeren Gangstufe im Getriebestrang A ausgegeben.
